# EUROPÄISCHE PATENTSCHRIFT

(11) **EP 3 098 131 B1**
(45) Veröffentlichungstag und Bekanntmachung des Hinweises auf die Patenterteilung: **18.08.2021**
(21) Anmeldenummer: 16000820.7
(22) Anmeldetag: 11.04.2016
(51) Int. Cl.: B60W 30/18, B60W 40/076

(54) **VERFAHREN ZUR BESTIMMUNG EINER FAHRBAHNSTEIGUNG**
METHOD FOR DETERMINING ROAD ASCENT
PROCEDE DE DETERMINATION D'UNE PENTE DE LA CHAUSSEE

(30) Priorität: 29.05.2015 DE 102015006991
(43) Veröffentlichungstag der Anmeldung: 30.11.2016
(73) Patentinhaber: MAN Truck & Bus SE, 80995 München (DE)
(72) Erfinder: HÖNLE, Jochen, 86368 Gersthofen (DE); HÖR, Marc, 82256 Fürstenfeldbruck (DE); BERCHTOLD, Florian, 85748 Garching (DE)
(74) Vertreter: v. Bezold & Partner Patentanwälte - PartG mbB

(56) Entgegenhaltungen:
- DE-A1- 10 240 294
- DE-A1- 10 260 010
- DE-A1-102004 040 351
- DE-A1-102004 060 255
- DE-A1-102014 221 781

## Beschreibung

Die Erfindung betrifft ein Verfahren zur Bestimmung einer Fahrbahnsteigung, insbesondere für ein Fahrzeuggespann, aufweisend ein Fahrzeug und mindestens einen angekoppelten Anhänger.

Beim Anfahren eines Fahrzeuges an einer Steigung kann es bei Fahrzeugen mit automatischer Übersetzungseinstellung Probleme hinsichtlich der Wahl der richtigen Übersetzungsstufe geben. Dabei kann es beim Anfahren bis zum Erreichen einer Mindestgeschwindigkeit durch die automatische Übersetzungseinstellung zu unplausiblen Schaltungen kommen, die die Fahreigenschaft insgesamt negativ beeinflussen. Zum Verhindern der auftretenden Problematik ist es allgemein bekannt, beim Anfahren an einer Steigung eine Anfahrhilfe zu verwenden, die den Anfahrvorgang unterstützt.

Hierbei ist bekannt, bei derartigen Anfahrhilfen zum Anfahren an einem Berg eine Motormomentenanforderung zu wählen, bei der das Antriebsmoment die Hangabtriebskraft im Wesentlichen kompensiert. Um ein sicheres Anfahren zu ermöglichen, ist folglich eine möglichst exakte Bestimmung der Hangabtriebskraft, die eine Komponente des Fahrwiderstands darstellt, nötig.

Bei einem Fahrzeuggespann mit einem Fahrzeug (Zugfahrzeug) und einem angekoppelten Anhänger setzt sich die gesamte Hangabtriebskraft aus dem Beitrag des Zugfahrzeugs und dem des Anhängers zusammen. Voraussetzung für die Berechnung der Hangabtriebskraft ist die Kenntnis der Steigung der Fahrbahn. Aus der Praxis ist bekannt, die Steigung des Zugfahrzeugs zu bestimmen und damit die Hangabtriebskraft zu berechnen.

Nachteilig an den bekannten Ansätzen ist jedoch, dass die auf den Anhänger wirkende Fahrbahnsteigung nicht erfasst wird, diese aber z. B. bei einem Sattelschlepper den Großteil der Hangabtriebskraft verursachen kann. Bei herkömmlichen Lösungsansätzen, in denen die Steigung des Anhängers nicht ermittelt wird, kann es daher vorkommen, dass ein Anfahrvorgang fehlschlägt. Kommt beispielsweise das Zugfahrzeug nach dem Befahren einer Steigung bereits in der Ebene zum Stillstand, während sich der Anhänger noch in der Steigung befindet - eine Situation, die beispielsweise häufig bei Baustellenausfahrten auftreten kann -, wird in diesem Fall die benötigte Hangabtriebskraft als zu gering berechnet. Als Folge davon wird z. B. keine Drehzahlerhöhung vom Motor angefordert, und das real zum Anfahren benötigte Moment kann unter Umständen nicht erreicht werden.

Aus der Offenlegungsschrift DE 10 2014 221 781 A1 ist ein Fahrzeug-Steuerverfahren bekannt, bei dem ein Zugfahrzeug ein Zugfahrzeug-Straßengefälle bestimmt und ferner daraus ein Straßengefälle für ein vom Zugfahrzeug gezogenes Fahrzeug ableitet.

Es ist somit eine Aufgabe der Erfindung, die aus dem Stand der Technik bekannten Ansätze unter Vermeidung der vorstehend beschriebenen Nachteile weiterzubilden.

Diese Aufgaben werden durch Verfahren und Vorrichtungen mit den Merkmalen der unabhängigen Ansprüche gelöst. Vorteilhafte Ausführungsformen und Anwendungen der Erfindung ergeben sich aus den abhängigen Ansprüchen und werden in der folgenden Beschreibung unter teilweiser Bezugnahme auf die Figuren näher erläutert.

Gemäß einem ersten Gesichtspunkt der Erfindung wird ein Verfahren zur Bestimmung einer Fahrbahnsteigung für ein Fahrzeuggespann, aufweisend ein Fahrzeug und mindestens einen angekoppelten Anhänger, bereitgestellt. Das Zuggespann kann somit nur einen Anhänger, zwei oder mehr Anhänger oder eine Dolly-Anhänger-Kombination umfassen.

Das Verfahren umfasst in an sich bekannter Weise den Schritt, eine Fahrbahnsteigung eines ersten Abschnitts einer Fahrbahn, auf welchem sich das Fahrzeug momentan befindet, zu bestimmen. Diese Fahrbahnsteigung gibt somit die aktuelle, auf das Fahrzeug bzw. Zugfahrzeug wirkende Steigung der Fahrbahn an und wird nachfolgend als erste Fahrbahnsteigung bezeichnet, um diese von einer zweiten Fahrbahnsteigung, die auf den Anhänger wirkt, zu unterscheiden. Die erste Fahrbahnsteigung kann in an sich bekannter Weise mittels eines Neigungssensors oder in Abhängigkeit von aktuellen Fahrzeugdaten, wie beispielsweise einem aktuellen Fahrwiderstand und einem aktuellen Motormoment, ermittelt werden.

Erfindungsgemäß umfasst das Verfahren ferner die folgenden Schritte: Die Bestimmung eines Verlaufs der Fahrbahnsteigung entlang der zurückgelegten Fahrtstrecke, die beispielsweise als eine Steigungstrajektorie ermittelt oder aufgezeichnet werden kann; und die Bestimmung einer Fahrbahnsteigung eines zweiten Abschnitts einer Fahrbahn, auf welchem sich der wenigstens eine Anhänger momentan befindet (nachfolgend als zweite Fahrbahnsteigung bezeichnet), unter Verwendung des bestimmten Verlaufs der Fahrbahnsteigung. Erfindungsgemäß wird somit nicht nur die auf das Fahrzeug wirkende Fahrbahnsteigung ermittelt, sondern auch die auf den wenigstens einen Anhänger wirkende Fahrbahnsteigung, wodurch die effektiv auf das Fahrzeug wirkende Hangabtriebskraft genauer ermittelt werden kann. Ein besonderer Vorzug der Erfindung liegt ferner darin, dass aufgrund der Verwendung des ermittelten Verlaufs der Fahrbahnsteigung zur Bestimmung der auf den Anhänger wirkenden momentanen Fahrbahnsteigung die im Zugfahrzeug bereits vorhandenen Mittel zur Steigungsbestimmung verwendet werden können und keine separate Messvorrichtung im Anhänger zur Steigungsermittlung vonnöten ist.

Erfindungsgemäß wird die effektive Fahrbahnsteigung für das Fahrzeuggespann aus der bestimmten ersten und der bestimmten zweiten Fahrbahnsteigung ermittelt werden, d. h., die effektive, auf das Fahrzeuggespann wirkende Steigung ergibt sich aus der Verrechnung von erster und zweiter Fahrbahnsteigung, d. h. aus der Verrechnung von Fahrzeug- und Anhängersteigung.

Im Rahmen der Erfindung besteht die Möglichkeit, dass anhand der momentanen Position des Fahrzeugs die momentane Position des wenigstens einen Anhängers in der Steigungstrajektorie bestimmt wird. Aus der momentanen Position des Anhängers können unter Verwendung des bestimmten Verlaufs der Fahrbahnsteigung ein oder mehrere Fahrbahnsteigungswerte bestimmt werden, die der Position des Anhängers entsprechen, um daraus die auf den Anhänger wirkende Fahrbahnsteigung (zweite Fahrbahnsteigung) zu bestimmen.

Gemäß einer Ausgestaltungsform der Erfindung kann aus dem bestimmten Verlauf der Fahrbahnsteigung zumindest ein Fahrbahnsteigungswert bestimmt werden, der einer Fahrbahnsteigung an zumindest einer Stelle innerhalb des zweiten Fahrbahnabschnitts entspricht, und zur Bestimmung der zweiten Fahrbahnsteigung verwendet werden. Beispielsweise kann die zweite Fahrbahnsteigung nur anhand eines Fahrbahnsteigungswerts des zweiten Fahrbahnabschnitts oder anhand von zwei Fahrbahnsteigungswerten, die eine Fahrbahnsteigung am Anfang und Ende des zweiten Fahrbahnabschnitts bzw. am Anfang und Ende des Anhängers angeben, bestimmt werden.

Gemäß einer besonders bevorzugten Ausgestaltungsform der Erfindung wird aus dem bestimmten Verlauf der Fahrbahnsteigung ein Teilverlauf der Fahrbahnsteigung bestimmt, der dem Verlauf der Fahrbahnsteigung auf dem zweiten Fahrbahnabschnitt entspricht. Aus diesem bestimmten Teilverlauf der Fahrbahnsteigung wird gemäß dieser Ausführungsform die zweite Fahrbahnsteigung als gemittelte Steigung des zweiten Abschnitts der Fahrbahn ermittelt. Hierzu kann eine konstante Massenverteilung über die Länge des wenigstens einen Anhängers zu Grunde gelegt werden. Dies ermöglicht eine besonders genaue Bestimmung der zweiten Fahrbahnsteigung, was insbesondere bei langen Anhängern, zwei Anhängern oder Dolly-Anhänger-Kombinationen und/oder sich stark ändernden Steigungswerten entlang des zweiten Fahrbahnabschnitts vorteilhaft ist.

Bei einer vorteilhaften Variante dieser Ausgestaltungsformen kann der Teilverlauf der Fahrbahnsteigung und/oder der zumindest eine Fahrbahnsteigungswert, der einer Fahrbahnsteigung an zumindest einer Stelle innerhalb des zweiten Fahrbahnabschnitts entspricht, in Abhängigkeit von einer momentanen Fahrzeugposition und von wenigstens einem Parameter bestimmt werden, wobei der wenigstens eine Parameter eine Relativposition des Anhängers zum Fahrzeug, eine Länge des Zugfahrzeugs, eine Länge des Anhängers und/oder eine Größe, aus dem die Relativposition und/oder die Länge des Anhängers ableitbar ist, angibt.

Beispielweise kann der wenigstens eine Parameter einen Überhang, Radstand und Achsabstand des Zugfahrzeugs angeben. Aus diesen Werten kann eine Länge des Zugfahrzeugs abgeleitet werden, woraus sich wiederum die Anfangsposition des wenigstens einen Anhängers ableiten lässt und somit die korrespondierende Anfangsposition in der Steigungstrajektorie. Ferner kann der wenigstens eine Parameter einen Radstand des Anhängers und/oder den Fahrzeugtyp angeben. Diese Variante bietet den Vorteil, dass eine im Fahrzeug vorgesehene Steuervorrichtung, die eingerichtet ist, das erfindungsgemäße Verfahren auszuführen, lediglich durch Anpassen der Parameterwerte an unterschiedliche Fahrzeugtypen und Arten von Zuggespannen angepasst werden kann.

Eine Möglichkeit der erfindungsgemäßen Realisierung sieht ferner vor, die effektive Fahrbahnsteigung als gewichteten Mittelwert der ersten und zweiten Fahrbahnsteigung zu bestimmen, wobei die erste Fahrbahnsteigung mit einem Faktor gewichtet wird, der einen Anteil des Fahrzeugs an der Gesamtmasse des Fahrzeuggespanns angibt, und die zweite Fahrbahnsteigung mit einem Faktor gewichtet wird, der einen Anteil des Anhängers an der Gesamtmasse des Fahrzeuggespanns angibt.

Falls das Fahrzeuggespann mehr als einen Anhänger aufweist, kann eine zweite Fahrbahnsteigung mittels eines Teilverlaufs der bestimmten Fahrbahnsteigung ermittelt werden, der alle Anhänger umfasst. Alternativ kann für jeden Anhänger ein separater Teilverlauf der Fahrbahnsteigung ermittelt werden, um für jeden Anhänger einen eigenen Fahrbahnsteigungswert zu ermitteln, der auf den jeweiligen Anhänger wirkt. Die zweite Fahrbahnsteigung, die die Fahrbahnsteigung für alle Anhänger angibt, kann dann aus diesen Fahrbahnsteigungen für jeden Anhänger berechnet werden, beispielsweise durch Mittelung der bestimmten Fahrbahnsteigungswerte für jeden Anhänger oder durch eine gewichtete Mittelung, z. B. basierend auf den Anhängerlängen oder Anhängermassen.

Vorstehend wurde bereits erwähnt, dass der Verlauf der Fahrbahnsteigung in Form einer Steigungstrajektorie aufgezeichnet und zumindest zweitweise im Fahrzeug gespeichert werden kann, die beispielsweise bei Vorwärtsfahrt des Fahrzeugs mit einer Fahrzeugsensorik, z. B. einem Neigungssensor, oder durch eine Berechnung ermittelt wird. Der Verlauf der Fahrbahnsteigung kann jedoch auch aus Topographiedaten und/oder aus Streckendaten, die Steigungs- und Gefälleinformationen enthalten, bestimmt werden.

Gemäß einer weiteren Variante wird der Verlauf der Fahrbahnsteigung bzw. die Steigungstrajektorie nur für die zuletzt in Vorwärtsfahrt zurückgelegte Wegstrecke der Länge x gespeichert, wobei x einen Wert aufweist, der kleiner als 50 Meter, weiter vorzugsweise kleiner als 20 Meter ist. Dies ist im Hinblick auf übliche Gespannlängen und Rangierradien ausreichend, um die jeweils auf den Anhänger wirkende Fahrbahnsteigung aus den gespeicherten Steigungswerten zu ermitteln.

Das Fahrzeuggespann kann beispielsweise ein Sattelzug bzw. Sattelschlepper sein, mit einer Sattelzugmaschine als Fahrzeug und einem Auflieger als Anhänger. Das Fahrzeuggespann kann beispielsweise ein Lastzug bzw. Gliederzug sein, mit einem Zugfahrzeug und einem Anhänger. Das Fahrzeuggespann kann ferner als sog. Gigaliner ausgeführt sein. Der Anhänger kann auch als Dolly-Anhänger-Kombination ausgeführt sein.

Gemäß einem weiteren Gesichtspunkt der Erfindung wird ein Verfahren zur Ermittlung des zu überwindenden Fahrwiderstandes beim Anfahren eines Fahrzeuggespanns bzw. eines Fahrzeugs mit Anhänger an einem Hang bereitgestellt, bei dem die auf das Fahrzeug wirkende Hangabtriebskraft und daraus der zu überwindende Fahrwiderstand ermittelt wird. Erfindungsgemäß ist das Verfahren dadurch gekennzeichnet, dass eine für die Bestimmung der Hangabtriebskraft benötigte Fahrbahnsteigung gemäß dem Verfahren zur Bestimmung einer Fahrbahnsteigung, wie in diesem Dokument offenbart, bestimmt wird.

Gemäß einem weiteren Gesichtspunkt der Erfindung wird eine Vorrichtung bereitgestellt, die eingerichtet ist, das Verfahren zur Bestimmung einer Fahrbahnsteigung, wie in diesem Dokument offenbart, durchzuführen. Zur Vermeidung von Wiederholungen sollen rein verfahrensgemäß offenbarte Merkmale auch als vorrichtungsgemäß offenbart gelten und beanspruchbar sein.

Die Erfindung betrifft ferner ein Fahrzeug, insbesondere ein Nutzfahrzeug, mit einer solchen Vorrichtung.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1: ein Ablaufdiagramm zur Illustration der Schritte eines Verfahrens zur Bestimmung einer Fahrbahnsteigung gemäß einer Ausführungsform der Erfindung;
- Figur 2: ein Fahrzeuggespann auf einer Fahrbahn; und
- Figur 3: eine beispielhafte Darstellung einer Steigungstrajektorie.

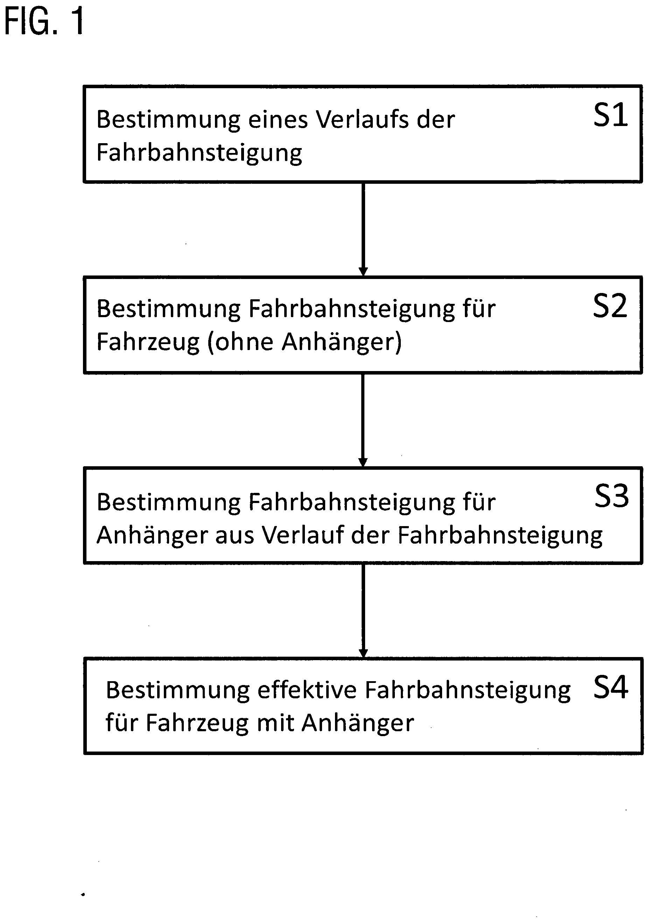

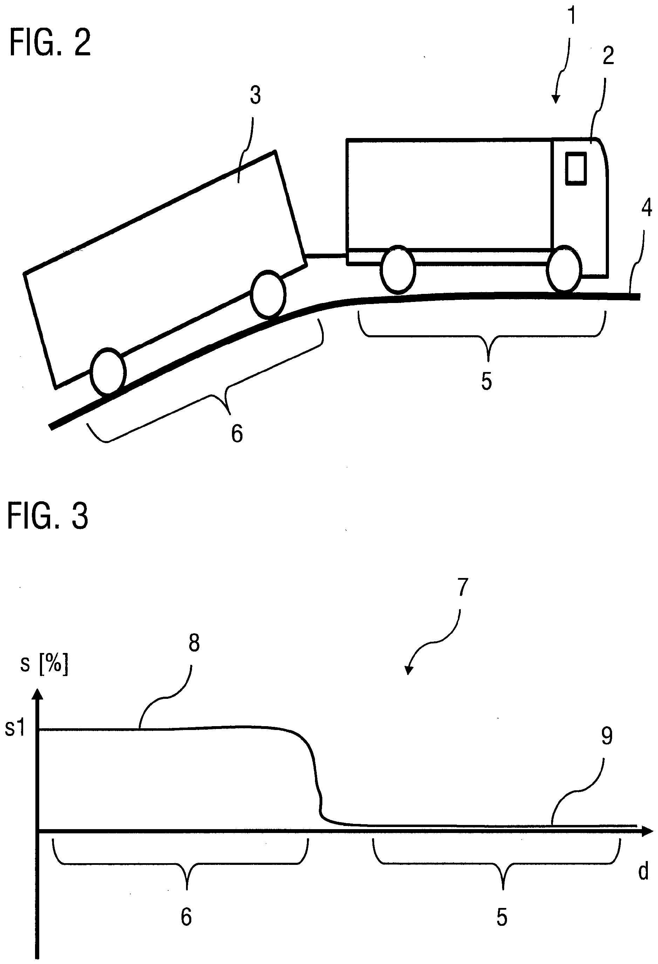

Figur 1 zeigt ein Ablaufdiagramm eines Verfahrens zur Bestimmung einer Fahrbahnsteigung für ein Fahrzeuggespann. Das Fahrzeuggespann 1 ist beispielhaft in Figur 2 dargestellt und besteht aus einem Zugfahrzeug 2 und einem angekoppelten Anhänger 3, die auf einer Fahrbahn 4 fahren. In der in Figur 2 dargestellten Situation befindet sich das Zugfahrzeug 2 auf einem nahezu ebenen Fahrbahnabschnitt 5, während sich der Anhänger 3 noch am Ende eines steilen Steigungsabschnitts 6 der Fahrbahn 4 befindet.

Das Zugfahrzeug ist in an sich bekannter Weise in der Lage, jeweils die aktuelle Fahrbahnsteigung zu bestimmen, beispielsweise mittels eines Neigungssensors. Ist das Zugfahrzeug nicht mit einem Neigungssensor ausgestattet, sind aus dem Stand der Technik Ansätze bekannt, anhand aktueller Fahrzeugdaten die aktuelle Fahrbahnsteigung abzuleiten, beispielsweise in Abhängigkeit von einem Fahrwiderstand und einem aktuellen Motormoment. Je größer das aktuelle Motormoment bei einem aktuellen Fahrwiderstand ist, desto größer ist die aktuelle Steigung.

Gemäß dem erfindungsgemäßen Verfahren wird nun in Schritt S1 der Verlauf der Fahrbahnsteigung bei einer Vorwärtsfahrt des Fahrzeugs 2 bestimmt und in Form einer Steigungstrajektorie aufgezeichnet. Figur 3 zeigt beispielhaft eine solche Steigungstrajektorie 7, die den Verlauf der Steigung entlang der zurückgelegten Fahrstrecke d angibt. In Figur 3 ist der zuletzt erfasste Teil der Steigungstrajektorie 7 dargestellt, der dem in Figur 2 gezeigten Fahrbahnverlauf entspricht. Die Fahrbahnsteigung 9 entlang des Abschnitts 5 der Fahrbahn 4, auf welchem sich das Zugfahrzeug 2 momentan befindet, weist einen nahezu konstanten Verlauf nahe null auf, da die Fahrbahn im Abschnitt 5 nur leicht ansteigt.

Die Fahrbahnsteigung 8 entlang des Abschnitts 6 der Fahrbahn 4, auf welchem sich der Anhänger 3 momentan befindet, weist dagegen einen nahezu konstanten Verlauf der Steigung mit dem Wert s1 auf, da die Fahrbahn im Abschnitt 6 konstant stark ansteigt. Im Übergangsbereich zwischen den Abschnitten 6 und 5 sinkt die Trajektorie 7 von s1 auf den Wert im Bereich 9 ab.

In Schritt S2 wird eine erste Fahrbahnsteigung bestimmt, die die Fahrbahnsteigung des Zugfahrzeugs 2 im Bereich 5 der Fahrbahn 4 angibt, auf welchem sich das Zugfahrzeug momentan befindet. Beispielsweise kann der aktuelle Messwert eines im Zugfahrzeug vorgesehenen Neigungssensors zur Festlegung der ersten Fahrbahnsteigung verwendet werden.

In Schritt S3 wird dann ein Wert für die Fahrbahnsteigung im Abschnitt 6 der Fahrbahn 4 ermittelt, auf welchem sich der Anhänger 3 momentan befindet. Hierfür wird der zuvor aufgezeichnete Verlauf 7 der Fahrbahnsteigung verwendet. Um aus den gespeicherten Steigungsdaten die der aktuellen Anhängerposition entsprechenden Steigungsdaten zur ermitteln, wird die Position des Anhängers 3 relativ zum Zugfahrzeug 2 ermittelt, beispielsweise anhand der Länge des Zugfahrzeugs 2 und der Länge des Anhängers 3. Aus der Position des Anhängers 3 werden diejenigen Werte 8 der Steigungstrajektorie ermittelt, die die Fahrbahnsteigung für den Fahrbahnabschnitt 6 angeben, auf denen sich der Anhänger 3 momentan befindet. Aus den Werten des Abschnitts 8 der Steigungstrajektorie wird unter Annahme einer linearen Massenverteilung des Anhängers 3 eine gemittelte Steigung im Abschnitt 6 berechnet und als Wert für die zweite Fahrbahnsteigung festgelegt. Ist die Schwankung der Steigungstrajektorie 7 im Abschnitt 6 klein, kann statt einer gemittelten Steigung auch ein einzelner Steigungswert des Bereichs 8 verwendet werden, um die zweite Fahrbahnsteigung festzulegen.

Anschließend kann in Schritt S4 eine effektive Fahrbahnsteigung für das Fahrzeuggespann 1 berechnet werden, indem die effektive Fahrbahnsteigung als gewichteter Mittelwert der ersten und zweiten Fahrbahnsteigung bestimmt wird, wobei die erste Fahrbahnsteigung mit einem Faktor gewichtet wird, der einen Anteil des Fahrzeugs 2 an der Gesamtmasse des Fahrzeuggespanns 1 angibt, und die zweite Fahrbahnsteigung mit einem Faktor gewichtet wird, der einen Anteil des Anhängers 3 an der Gesamtmasse des Fahrzeuggespanns angibt.

Die so ermittelte effektive Fahrbahnsteigung kann dann einer nachfolgenden Berechnung der Hangabtriebskraft zu Grunde gelegt werden. Die mittels der effektiven Fahrbahnsteigung berechnete Hangabtriebskraft kann dann als Eingangsgröße für die aus der Praxis bekannten Anfahrhilfen und/oder zum Festlegen der Schaltstrategien beim Anfahren verwendet werden, um ein erfolgreiches Anfahren des Fahrzeuggespanns 1 sicherzustellen.

Obwohl die Erfindung unter Bezugnahme auf bestimmte Ausführungsbeispiele beschrieben worden ist, ist es für einen Fachmann ersichtlich, dass verschiedene Änderungen ausgeführt werden können und Äquivalente als Ersatz verwendet werden können, ohne den Bereich der Erfindung zu verlassen. Zusätzlich können viele Modifikationen ausgeführt werden, ohne den zugehörigen Bereich zu verlassen. Folglich soll die Erfindung nicht auf die offenbarten Ausführungsbeispiele begrenzt sein, sondern soll alle Ausführungsbeispiele umfassen, die in den Bereich der beigefügten Patentansprüche fallen.

### Bezugszeichenliste

- 1: Fahrzeuggespann
- 2: Fahrzeug/Zugfahrzeug
- 3: Anhänger
- 4: Fahrbahn
- 5: Erster Fahrbahnabschnitt
- 6: Zweiter Fahrbahnabschnitt
- 7: Steigungstrajektorie
- 8: Teilverlauf der Steigungstrajektorie
- 9: Teilverlauf der Steigungstrajektorie

## Patentansprüche

1. Verfahren zur Bestimmung einer Fahrbahnsteigung für ein Fahrzeuggespann (1), aufweisend ein Fahrzeug (2) und wenigstens einen angekoppelten Anhänger (3), umfassend die Schritte:
Bestimmung einer ersten Fahrbahnsteigung eines ersten Abschnitts (5) einer Fahrbahn (4), auf welchem sich das Fahrzeug (2) momentan befindet (S2), umfassend die weiteren Schritte:
Bestimmung eines Verlaufs (7) der Fahrbahnsteigung (S1); und
Bestimmung einer zweiten Fahrbahnsteigung eines zweiten Abschnitts (6) einer Fahrbahn (4), auf welchem sich der wenigstens eine Anhänger (3) momentan befindet, mittels des bestimmten Verlaufs der Fahrbahnsteigung (S3) **gekennzeichnet durch** die Bestimmung einer effektiven Fahrbahnsteigung für das Fahrzeuggespann aus der bestimmten ersten und der bestimmten zweiten Fahrbahnsteigung (S4).

2. Verfahren nach Anspruch 1, **dadurch gekennzeichnet, dass** aus dem bestimmten Verlauf (7) der Fahrbahnsteigung zumindest ein Fahrbahnsteigungswert bestimmt wird, der einer Fahrbahnsteigung an zumindest einer Stelle innerhalb des zweiten Fahrbahnabschnitts (6) entspricht und zur Bestimmung der zweiten Fahrbahnsteigung verwendet wird.

3. Verfahren nach einem der Ansprüche 1 bis 2, **dadurch gekennzeichnet,**
(a) **dass** aus dem bestimmten Verlauf (7) der Fahrbahnsteigung ein Teilverlauf (8) der Fahrbahnsteigung bestimmt wird, der dem Verlauf (7) der Fahrbahnsteigung auf dem zweiten Fahrbahnabschnitt (6) entspricht; und
(b) **dass** aus dem bestimmten Teilverlauf (8) der Fahrbahnsteigung die zweite Fahrbahnsteigung als gemittelte Steigung des zweiten Abschnitts (6) der Fahrbahn (4) ermittelt wird.

4. Verfahren nach Anspruch 2 oder 3, **dadurch gekennzeichnet, dass** der Teilverlauf (8) der Fahrbahnsteigung und/oder der zumindest eine Fahrbahnsteigungswert, der einer Fahrbahnsteigung an zumindest einer Stelle innerhalb des zweiten Fahrbahnabschnitts (6) entspricht, in Abhängigkeit von einer momentanen Fahrzeugposition und von wenigstens einem Parameter bestimmt wird, wobei der wenigstens eine Parameter eine Relativposition des wenigstens einen Anhängers zum Fahrzeug, eine Länge des wenigstens einen Anhängers und/oder eine Größe, aus dem die Relativposition und/oder die Länge des wenigstens einen Anhängers ableitbar ist, angibt.

5. Verfahren nach einem der Ansprüche 1 bis 4, **dadurch gekennzeichnet, dass** die effektive Fahrbahnsteigung als gewichteter Mittelwert der ersten und zweiten Fahrbahnsteigung bestimmt wird, wobei die erste Fahrbahnsteigung mit einem Faktor gewichtet wird, der einen Anteil des Fahrzeugs an der Gesamtmasse des Fahrzeuggespanns angibt, und die zweite Fahrbahnsteigung mit einem Faktor gewichtet wird, der einen Anteil des wenigstens einen Anhängers an der Gesamtmasse des Fahrzeuggespanns angibt.

6. Verfahren nach einem der vorhergehendem Ansprüche, **dadurch gekennzeichnet, dass** die erste Fahrbahnsteigung mittels eines Neigungssensors oder in Abhängigkeit von einem Fahrwiderstand und einem aktuellen Motormoment ermittelt wird.

7. Verfahren nach einem der vorhergehendem Ansprüche, **dadurch gekennzeichnet,**
(a) **dass** der Verlauf der Fahrbahnsteigung (7) als eine Steigungstrajektorie aufgezeichnet wird, vorzugsweise bei einer Vorwärtsfahrt des Fahrzeugs;
(b) **dass** der Verlauf der Fahrbahnsteigung aus Topographiedaten und/oder aus Streckendaten, die Steigungs- und Gefälleinformationen enthalten, bestimmt wird.

8. Verfahren zur Ermittlung des zu überwindenden Fahrwiderstandes beim Anfahren eines Fahrzeuges mit wenigstens einem Anhänger an einem Hang durch ein im Stillstand befindliches Fahrzeug, bei dem die auf das Fahrzeug wirkende Hangabtriebskraft und daraus der zu überwindende Fahrwiderstand ermittelt wird,
**dadurch gekennzeichnet,**
**dass** eine für die Bestimmung der Hangabtriebskraft benötigte Fahrbahnsteigung gemäß dem Verfahren nach einem der Ansprüche 1 bis 7 bestimmt wird.

9. Vorrichtung, die eingerichtet ist, das Verfahren nach einem der Ansprüche 1 bis 8 durchzuführen.

10. Fahrzeug, insbesondere Nutzfahrzeug, mit einer Vorrichtung nach Anspruch 9, insbesondere ein Fahrzeuggespann, das (a) ein Sattelzug ist, mit einer Sattelzugmaschine als Fahrzeug und einem Auflieger als Anhänger; oder (b) ein Lastzug ist, mit einem Zugfahrzeug und genau einem Anhänger, (c) ein Lastzug ist, mit einem Zugfahrzeug und mindestens zwei Anhängern oder mit einem Zugfahrzeug und einer Dolly-Anhänger-Kombination.

## Claims

1. A method for determining a road gradient for a vehicle combination (1) having a vehicle (2) and at least one coupled trailer (3), comprising the steps:
determining a first road gradient of a first section (5) of a road (4) on which the vehicle (2) is currently located (S2),
comprising the further steps:
determining a profile (7) of the road gradient (S1); and
determining a second road gradient of a second section (6) of a road (4) on which the at least one trailer (3) is currently located, by means of the determined profile of the road gradient (S3), **characterized by** the determination of an effective road gradient for the vehicle combination from the determined first and the determined second roadway gradients (S4).

2. The method according to Claim 1, **characterized in that** at least one road gradient value which corresponds to a road gradient at at least one location within the second road section (6) and is used to determine the second road gradient is determined from the determined profile (7) of the road gradient.

3. The method according to one of Claims 1 to 2, **characterized**
(a) **in that** a partial profile (8) of the road gradient is determined from the determined profile (7) of the road gradient, which partial profile corresponds to the profile (7) of the road gradient in the second road section (6); and
(b) **in that** the second road gradient is determined as an average gradient of the second section (6) of the road (4) from the determined partial profile (8) of the road gradient.

4. The method according to Claim 2 or 3, **characterized in that** the partial profile (8) of the road gradient and/or the at least one road gradient value which corresponds to a road gradient at at least one location within the second road section (6) is determined as a function of an instantaneous vehicle position and of at least one parameter, wherein the at least one parameter specifies a relative position of the at least one trailer with respect to the vehicle, a length of the at least one trailer and/or a variable from which the relative position and/or the length of the at least one trailer can be derived.

5. The method according to one of Claims 1 to 4, **characterized in that** the effective road gradient is determined as a weighted mean value of the first and second road gradient, wherein the first road gradient is weighted with a factor which specifies a proportion of the total mass of the vehicle combination, which proportion is made up by the vehicle, and the second road gradient is weighted with a factor which specifies a proportion of the overall mass of the vehicle combination, which proportion is made up by the at least one trailer.

6. The method according to one of the preceding claims, **characterized in that** the first road gradient is determined by means of an inclination sensor or as a function of a driving resistance and a current engine torque.

7. The method according to one of the preceding claims, **characterized**
(a) **in that** the profile of the road gradient (7) is recorded as a gradient trajectory, preferably during forward travel of the vehicle;
(b) **in that** the profile of the road gradient is determined from topography data and/or from route data which contain the positive gradient and negative gradient information.

8. The method for determining the driving resistance to be overcome when a vehicle with at least one trailer starts on a slope, by a vehicle which is in a stationary state, in which the downhill slope force acting on the vehicle is determined, and the driving resistance to be overcome is determined therefrom,
**characterized**
**in that** a road gradient which is required to determine the downhill slope force is determined in accordance with a method according to one of Claims 1 to 7.

9. A device which is configured to carry out the method according to one of Claims 1 to 8.

10. A vehicle, in particular a utility vehicle, having a device according to Claim 9, in particular a vehicle combination which is (a) a tractor-trailer, having a tractive unit as the vehicle and a semitrailer as the trailer; or (b) a transport train having a tractor vehicle and precisely one trailer, (c) a transport train having a tractor vehicle and at least two trailers or having a tractor vehicle and a dolly trailer combination.

## Revendications

1. Procédé de détermination d'une pente de route pour un attelage (1) comportant un véhicule (2) et au moins une remorque attelée (3), ledit procédé comprenant les étapes suivantes :
déterminer une première pente de route d'un premier tronçon (5) d'une route (4) sur laquelle le véhicule (2) est actuellement situé (S2), ledit procédé comprenant les étapes supplémentaires suivantes :
déterminer un tracé (7) de la pente de route (S1) ; et
déterminer une deuxième pente de route d'un deuxième tronçon (6) d'une route (4) sur laquelle l'au moins une remorque (3) est actuellement située, au moyen du tracé déterminé de la pente de route (S3), **caractérisé par** la détermination d'une pente de route effective pour l'attelage à partir des première et deuxième pentes de route déterminées (S4).

2. Procédé selon la revendication 1, **caractérisé en ce qu'**au moins une valeur de pente de route est déterminée à partir du tracé déterminé (7) de la pente de route, laquelle valeur correspond à une pente de route à au moins un emplacement situé à l'intérieur du deuxième tronçon de route (6) et est utilisée pour déterminer la deuxième pente de route.

3. Procédé selon l'une des revendications 1 et 2, **caractérisé en ce que**
(a) une partie de tracé (8) de la pente de route est déterminée à partir du tracé déterminé (7) de la pente de route, laquelle partie de tracé correspond au tracé (7) de la pente de route sur le deuxième tronçon de route (6) ; et
(b) la deuxième pente de route est déterminée comme la pente moyenne du deuxième tronçon (6) de la route (4) à partir de la partie de tracé déterminée (8) de la pente de route.

4. Procédé selon la revendication 2 ou 3, **caractérisé en ce que** la partie de tracé (8) de la pente de route et/ou l'au moins une valeur de pente de route, qui correspond à une pente de route à au moins un emplacement situé à l'intérieur du deuxième tronçon de route (6), sont déterminées en fonction d'une position de véhicule actuelle et d'au moins un paramètre, l'au moins un paramètre indiquant une position relative de l'au moins une remorque par rapport au véhicule, une longueur de l'au moins une remorque et/ou une grandeur à partir de laquelle la position relative et/ou la longueur de l'au moins une remorque peuvent être dérivées.

5. Procédé selon l'une des revendications 1 à 4, **caractérisé en ce que** la pente de route effective est déterminée comme valeur moyenne pondérée des première et deuxième pentes de route, la première pente de route étant pondérée avec un facteur indiquant une proportion du véhicule dans la masse totale de l'attelage, et la deuxième pente de route étant pondérée avec un facteur indiquant une proportion de l'au moins une remorque dans la masse totale de l'attelage.

6. Procédé selon l'une des revendications précédentes, **caractérisé en ce que** la première pente de route est déterminée au moyen d'un capteur d'inclinaison ou en fonction d'une résistance au roulement et d'un couple moteur actuel.

7. Procédé selon l'une des revendications précédentes, **caractérisé en ce que**
(a) le tracé de la pente de route (7) est enregistré comme trajectoire de pente, de préférence lorsque le véhicule se déplace vers l'avant ;
(b) le tracé de la pente de route est déterminé à partir de données topographiques et/ou de données d'itinéraire qui contiennent des informations sur les pentes et déclivités.

8. Procédé de détermination de la résistance au roulement à surmonter lors du démarrage d'un véhicule pourvu d'au moins une remorque sur une descente par un véhicule à l'arrêt, procédé dans lequel la force de descente agissant sur le véhicule et à partir de là la résistance au roulement à surmonter sont déterminées,
**caractérisé en ce que**
une pente de route nécessaire pour déterminer la force de descente est déterminée conformément au procédé selon l'une des revendications 1 à 7.

9. Dispositif adapté pour mettre en œuvre le procédé selon l'une des revendications 1 à 8.

10. Véhicule, en particulier véhicule utilitaire, comprenant un dispositif selon la revendication 9, en particulier un attelage, qui est (a) un train routier double comportant un tracteur routier comme véhicule et une semi-remorque comme remorque ; ou (b) un train routier comportant un véhicule tracteur et exactement une remorque, (c) un train routier comportant un véhicule tracteur et au moins deux remorques ou un véhicule tracteur et un ensemble de remorques pour conteneurs.
